Europäisches Patentamt

European Patent Office

Office européen des brevets

(11) Veröffentlichungsnummer: **0 024 040**
**A1**

(12) # EUROPÄISCHE PATENTANMELDUNG

(21) Anmeldenummer: **80104658.2**

(51) Int. Cl.³: **C 03 B 5/20**

(22) Anmeldetag: **07.08.80**

(30) Priorität: **09.08.79 DE 2932282**

(43) Veröffentlichungstag der Anmeldung:
**18.02.81 Patentblatt 81/7**

(84) Benannte Vertragsstaaten:
**AT BE CH FR GB IT LI NL SE**

(71) Anmelder: **Sorg GmbH & Co. KG**
**Im Aller 23**
**D-8770 Lohr/Main(DE)**

(71) Anmelder: **Forma Glas GmbH & Co. KG**
**Schwarzstrasse 21**
**A-5020 Salzburg(AT)**

(72) Erfinder: **Sorg, Helmut**
**Im Himbeergrund 27**
**D-8752 Johannesberg(DE)**

(72) Erfinder: **Ilk, Emil**
**Ahornweg 4**
**D-8372 Zwiesel(DE)**

(74) Vertreter: **Schulze Horn, Stefan, Dipl.-Ing. et al,**
**Goldstrasse 36**
**D-4400 Münster(DE)**

(54) **Verfahren und Vorrichtung zum Abfehmen von Inhomogenitäten und Verunreinigungen in einer Glasschmelzwanne.**

(57) Abfehmvorrichtung mit einem beweglichen Streicharm (1) für eine Glaswanne (7) bei der der Streicharm (1) die Oberfläche der Glasschmelze (8) zur Erzeugung eines von Verunreinigungen freien Bereichs überstreicht, dadurch gekennzeichnet, daß der Streicharm (1) an einem im wesentlichen waagerecht liegenden Stiel (2) befestigt ist, der Teil einer eine Schubbewegung ausführenden Antriebsvorrichtung (3) ist, und daß der Streicharm (1) mit dem Stiel (2) anhebbar ist.

Fig.1

EP 0 024 040 A1

Die Erfindung betrifft eine Abfehmvorrichtung mit einem beweglichen Streicharm für eine Glaswanne, bei der der Streicharm die Oberfläche der Glasschmelze zur Erzeugung eines von Verunreinigungen freien Bereiches überstreicht, und ein Verfahren zum Betreiben der Abfehmvorrichtung.

Die Oberfläche einer Glasschmelze in einer Arbeitswanne weist häufig Inhomogenitäten und Verunreinigungen auf, die die Herstellung von hochwertigen Glasgegenständen erschweren oder verhindern. Diese kommen dadurch zustande, daß einerseits bei der Entnahme von Glasposten Luftblasen in die Schmelze gelangen können und andererseits bei bestimmten Gläsern durch Verdampfen flüchtiger Bestandteile die obere Schicht der Schmelze eine gegenüber der Hauptmasse des Glases veränderte Zusammensetzung annimmt.

Aus der DE-OS 27 11 811 ist eine Speiservorrichtung bekannt, bei der zur Erzielung einer homogenen und von Verunreinigungen freien Oberflächenschicht die Badoberfläche vor der Entnahme eines Postens durch einen Streicharm abgewischt wird. Der seitliche Rand des Speisers fluchtet mit der Oberfläche des Glasbades und der Streicherarm schiebt die Oberflächenschicht der Schmelze über den Rand ab.

Der Streicharm ist bei der bekannten Speiservorrichtung an einer rotierenden Achse befestigt, die neben dem Speiser angeordnet ist. Hieraus ergibt sich der Nachteil, daß ein erheblicher Raumbedarf für den rotierenden Streicharm besteht. Insbesondere bei manueller Entnahme der Glasposten stellt der rotierende Streicharm auch eine Gefährdung des Personals dar. Ein besonders schwerwiegender Nachteil der bekannten Vorrichtung besteht darin, daß der Streicharm nicht genügend tief in die Glasschmelze eintauchen kann, da er oberhalb der den Speiser begrenzenden Wandung rotiert. Ein Streicharm, der ausschließlich oberhalb der Glasoberfläche rotieren würde, ohne die Wandung zu überschreiten, würde dagegen die obere Schicht der Schmelze nicht in ausreichendem Maße aus der Glaswanne entfernen. Weiterhin kann der bekannte Streicharm wegen seiner senkrecht stehenden Achse nicht durch die ohnehin bei Speisern zur Entnahme von Glasposten vorhandenen, seitlich angeordneten Öffnungen arbeiten.

Es ist Aufgabe der Erfindung, diese Nachteile des Standes der Technik zu vermeiden und eine Abfehmvorrichtung der eingangs genannten Art zu schaffen, die bei geringem Raumbedarf eine wirksame Befreiung der Badoberfläche von Inhomogenitäten und Verunreinigungen gewährleistet. Die Bewegung des Streicharms soll dabei im wesentlichen oberhalb der Glasschmelze ablaufen, so daß eine Gefährdung des an der Glaswanne arbeitenden Personals nicht auftritt.

Ferner soll der Streicharm ausreichend tief in die Schmelze eintauchen, um die verunreinigte Oberflächenschicht zu entfernen. Schließlich soll die Abfehmvorrichtung durch die bei Arbeitswannen vorhandenen Entnahmeöffnungen arbeiten können.

Diese Aufgabe wird erfindungsgemäß dadurch gelöst, daß der Streicharm an einem im wesentlichen waagerecht liegenden Stiel befestigt ist, der Teil einer eine Schubbewegung ausführenden Antriebsvorrichtung ist, und daß der Streicharm mit dem Stiel anhebbar ist.

Vorteilhaft ist die Antriebsvorrichtung im wesentlichen eine Hydraulik- oder Pneumatikvorrichtung.

Bei einer vorteilhaften Ausgestaltung besteht die Antriebsvorrichtung aus einer um einen nahe der Glaswanne gelegenen Drehpunkt schwenkbaren Vorschubzylinder/-kolbenanordnung für eine horizontale und eine Hubzylinder/-kolbenanordnung für eine vertikale Bewegung.

Die Antriebsvorrichtung kann auch aus einer Kurvenscheibe bestehen, auf der das Ende des Stiels zwangsgeführt abläuft. Sie kann auch aus einem Zahnstangen-/Zahnradgetriebe bestehen.

Vorteilhaft schließt sich an die Glaswanne eine Glastasche mit einer äußeren Isolationsschicht zur Aufnahme des abgestrichenen Glases an. Die Isolationsschicht verhindert ein zu starkes Abkühlen des abgestrichenen Glases, das sonst statt abzufließen erstarren würde.

Die Abfehmvorrichtung weist vorteilhaft einen Fußschalter zur Auslösung jeweils eines Abstreichvorganges auf.

Um die thermische Beanspruchung des Streicharms herabzusetzen, weist dieser vorteilhaft ein durchlaufendes Rohrsystem zur Durchleitung eines Kühlmediums auf.

Das erfindungsgemäße Verfahren zum Betreiben der Abfehmvorrichtung ist dadurch gekennzeichnet, daß sich der Bewegungsablauf des Streicharms aus folgenden Schritten zusammensetzt:
- bei gesenktem Ende des Stiels wird der Streicharm vorgeschoben,

- durch das Anheben des Endes des Stiels wird der Streicharm auf die Oberfläche der Glasschmelze abgesenkt, bis er geringfügig in diese eintaucht,
- der Streicharm wird zum Rand der Glaswanne hin zurückgezogen, und
- bei Erreichen des Randbereichs der Glaswanne wird der Streicharm durch Absenken des Endes des Stiels angehoben, während er gleichzeitig über den Rand hinaus weiter zurückgezogen wird.

Im folgenden wird ein Ausführungsbeispiel der Erfindung anhand der Zeichnung näher erläutert. Es zeigen:

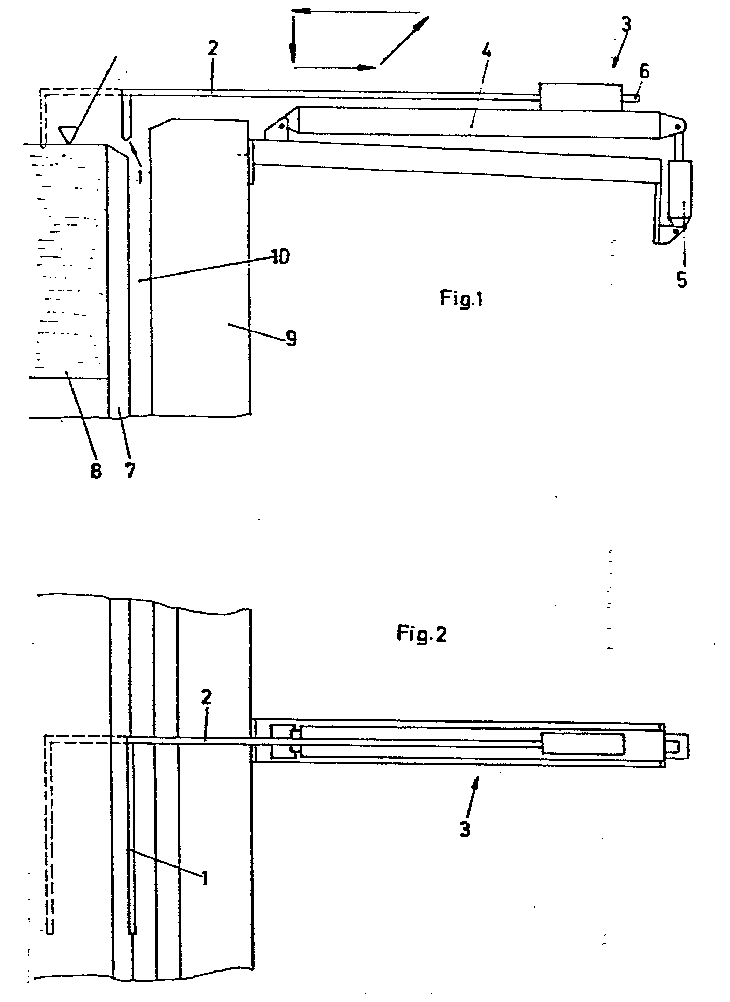

Figur 1 eine Seitenansicht der erfindungsgemäßen Abfehmvorrichtung und

Figur 2 eine Draufsicht auf die Abfehmvorrichtung gemäß Figur 1.

Die Abfehmvorrichtung besteht im wesentlichen aus einem an einem im wesentlichen waagerecht liegenden Stiel 2 befestigten Streicharm 1 und einer eine Schubbewegung ausführenden Antriebsvorrichtung 3. Die Antriebsvorrichtung 3 ist eine Hydraulikvorrichtung und besteht aus einer Vorschubzylinder/-kolbenanordnung 4 und einer Hubzylinder-/kolbenanordnung 5, die gelenkig miteinander verbunden sind. Die Vorschubzylinder/-kolbenanordnung ist um einen nahe der Glaswanne 7 gelegenen Drehpunkt schwenkbar. Hierdurch kann der Streicharm 1 in horizontaler und vertikaler Richtung bewegt werden. Mittels eines Kühlwasseranschlusses 6 kann Kühlwasser durch den Stiel 2 und den Streicharm 1 geleitet werden.

Der seitliche Rand der Glaswanne 7 fluchtet mit der Oberfläche der Glasschmelze 8. Vor der Glaswanne 7 ist auf Abstand eine einen Schutzschild ausbildende und mit einer Isolationsschicht versehene Wandung 9 angeordnet. Hierdurch wird zwischen der Glaswanne 7 und der Wandung 9 eine Glastasche 10 ausgebildet, die das abgestrichene Glas aufnimmt. Durch die Isolationsschicht wird eine zu starke Abkühlung des Glases in der Glastasche 10 verhindert.

Die Abfehmvorrichtung arbeitet folgendermaßen: Durch die Antriebsvorrichtung 3 wird der Streicharm 1 bei gesenktem Ende des Stiels 2 über die Oberfläche der Glasschmelze 8 vorgeschoben und dann soweit abgesenkt, daß er geringfügig in die Schmelze 8 eintaucht. Durch den Vorschubzylinder 4 wird der Streicharm nun horizontal zum Rand der Glaswanne 7 geführt und streicht so die Oberflächenschicht der Glasschmelze 8 ab. Das dabei zum Rand hin geschobene Glas läuft in die Glastasche 10 und kann dort gesammelt bzw. einer weiteren Verarbeitung zugeführt werden. Bei Erreichen des Randbereiches der Glaswanne wird der STreicharm durch Absenken des Endes des Stiels 2 angehoben, während er gleichzeitig über den Rand hinaus weiter zurückgezogen wird, bis er seine Ausgangsposition wieder erreicht hat. Dieser Vorgang wird vor jeder Entnahme eines Postens wiederholt, so daß jeweils ein von Inhomogenitäten und Verunreinigungen befreiter Oberflächenbereich für die Glasentnahme zur Verfügung steht. Er kann durch einen nicht dargestellten Fußschalter ausgelöst werden.

Die erfindungsgemäße Abfehmvorrichtung gewährleistet bei geringem Raumbedarf eine wirksame Befreiung der Badoberfläche von Inhomogenitäten und Verunreinigungen. Dadurch, daß der Streicharm sich im wesentlichen nur oberhalb der Glaswanne bewegt, ist insbesondere bei manueller Entnahme der Glasposten eine hohe Sicherheit für das an der Wanne arbeitende Personal gegeben. Die Antriebsvorrichtung ermöglicht einen Bewegungsablauf, der ein ausreichend tiefes Eintauchen des Streicharms gewährleistet. Ein besonderer Vorteil der Abfehmvorrichtung liegt darin, daß sie durch die bei Glaswannen ohnehin vorhandenen Entnahmeöffnungen arbeiten kann. Änderungen des Glasofens sind also nicht erforderlich. Die Abfehmvorrichtung kann als verfahrbares Gerät gebaut werden und an verschiedenen Glasöfen eingesetzt werden. Sie kann auch in Betriebspausen auf einfache Weise von der Glaswanne entfernt werden, so daß diese durch eine Abdeckung verschlossen werden kann, um eine Abkühlung der Glasschmelze so weit wie möglich zu unterbinden. Es kann daher von einer hervorragenden Lösung der anstehenden Probleme gesprochen werden.

Patentansprüche:

1. Abfehmvorrichtung mit einem beweglichen Streicharm für eine Glaswanne, bei der der Streicharm die Oberfläche der Glasschmelze zur Erzeugung eines von Verunreinigungen freien Bereichs überstreicht, dadurch gekennzeichnet, daß der Streicharm (1) an einem im wesentlichen waagerecht liegenden Stiel (2) befestigt ist, der Teil einer eine Schubbewegung ausführenden Antriebsvorrichtung (3) ist, und daß der Streicharm (1) mit dem Stiel (2) anhebbar ist.

2. Abfehmvorrichtung nach Anspruch 1, dadurch gekennzeichnet, daß die Antriebsvorrichtung (3) im wesentlichen eine Hydraulik- oder Pneumatikvorrichtung ist.

3. Abfehmvorrichtung nach Anspruch 2, dadurch gekennzeichnet, daß die Antriebsvorrichtung (3) aus einer um einen nahe der Glaswanne gelegenen Drehpunkt schwenkbaren Vorschubzylinder/-kolbenanordnung (4) für eine horizontale und eine Hubzylinder/-kolbenanordnung (5) für eine vertikale Bewegung besteht.

4. Abfehmvorrichtung nach Anspruch 1, dadurch gekennzeichnet, daß die Antriebsvorrichtung (3) aus einer Kurvenscheibe besteht, auf der das Ende des Stiels (2) zwangsgeführt abläuft.

5. Abfehmvorrichtung nach Anspruch 1, dadurch gekennzeichnet, daß die Antriebsvorrichtung (3) aus einem Zahnstangen-/Zahnradgetriebe besteht.

6. Abfehmvorrichtung nach Anspruch 1 bis 5, gekennzeichnet durch eine sich an die Glaswanne anschließende Glastasche (10) mit einer äußeren Isolationsschicht (9) zur Aufnahme des abgestrichenen Glases.

- 2 -

7. Abfehmvorrichtung nach Anspruch 1 bis 6, gekennzeichnet durch einen Fußschalter zur Auslösung jeweils eines Abstreichvorgangs.

8. Abfehmvorrichtung nach Anspruch 1 bis 7, gekennzeichnet durch ein den Streicharm durchlaufendes Rohrsystem zur Durchleitung eines Kühlmediums.

9. Verfahren zum Betreiben der Abfehmvorrichtung nach Anspruch 1 bis 8, dadurch gekennzeichnet, daß sich der Bewegungsablauf des Streicharms (1) aus folgenden Schritten zusammensetzt:
   - bei gesenktem Ende des Stiels (2) wird der Streicharm (1) vorgeschoben,
   - durch das Anheben des Endes des Stiels (2) wird der Streicharm (1) auf die Oberfläche der Glasschmelze (8) abgesenkt, bis er geringfügig in diese eintaucht,
   - der Streicharm (1) wird zum Rand der Gla-wanne (7) hin zurückgezogen, und
   - bei Erreichen des Randbereichs der Glaswanne (7) wird der Streicharm (1) durch Absenken des Endes des Stiels (2) angehoben, während er gleichzeitig über den Rand hinaus weiter zurückgezogen wird.

Fig.1

Fig.2

0024040

Europäisches
Patentamt

**EUROPÄISCHER RECHERCHENBERICHT**

Nummer der Anmeldung
EP 80 10 4658

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>DE - A - 1 804 460</u> (SAINT-GOBAIN)<br>* Komplet * | 1,6,9 |
| | -- | |
| A | <u>US - A - 1 810 911</u> (FERNGREN)<br>* Figur 4 * | |
| | -- | |
| A | <u>US - A - 1 538 215</u> (REECE)<br>* Komplet * | |
| | -- | |
| A | <u>US - A - 2 247 424</u> (WILLIAMS)<br>* Komplet * | |
| | -- | |
| A | <u>US - A - 3 666 432</u> (KUNKLE)<br>* Komplet * | |
| | ---- | |

**KLASSIFIKATION DER ANMELDUNG (Int. Cl.)**

C 03 B 5/20

**RECHERCHIERTE SACHGEBIETE (Int. Cl.³)**

C 03 B 5/20
7/22

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort<br>Den Haag | Abschlußdatum der Recherche<br>10-11-1980 | Prüfer<br>VAN DEN BOSSCHE |
|---|---|---|

EPA form 1503.1   06.78